# EUROPÄISCHE PATENTANMELDUNG

(11) **EP 4 585 499 A1**
(43) Veröffentlichungstag der Anmeldung: **16.07.2025**
(21) Anmeldenummer: 24151605.3
(22) Anmeldetag: 12.01.2024
(51) Int. Cl.: B62K 25/28, B62M 9/16, B62K 11/04

(54) **FAHRZEUG, INSBESONDERE ZWEIRAD, MIT RIEMENTRIEB UND SCHWINGE**

(71) Anmelder: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Gramm, Lins & Partner Patent- und Rechtsanwälte PartGmbB

(57) **Zusammenfassung**

Die Erfindung betrifft ein Fahrzeug (10), insbesondere Zweirad, mit einem Rahmen (12), einem angetriebenen Rad (14), insbesondere einem angetriebenen Hinterrad, einem Antrieb (16), insbesondere mit einem Elektromotor (20), und einer Federung (18), mittels der das Rad (14) federnd mit dem Rahmen (12) verbunden ist, mittels eines Riementriebes (22), der angeordnet ist zum Übertragen eines Antriebsdrehmoments vom Antrieb (16) auf das Rad (14) und eine Antriebsriemenscheibe (36), einen Riemen (24), einen Riemenspanner (28), der angeordnet ist zum Ausüben einer Spannkraft auf ein Leertrum (30) des Riemens (24), und eine Abtriebsriemenscheibe (26), die konzentrisch zum Rad (14) angeordnet ist, aufweist, wobei die Federung (18) eine Schwinge (32) aufweist, die in einer Schwingen-Lagerung (34) am Rahmen (12) gelagert ist, ein freies Ende hat, an dem das Rad (14) befestigt ist, und eine Schwingen-Feder (37) zum Vorspannen der Schwinge (32) in einer Ruhelage hat, wobei eine Antriebsriemenscheiben-Drehachse (D₃₆) von einer Schwingen-Momentanschwenkachse (S₃₂), um die die Schwinge (32) schwenkt, beabstandet ist.

## Beschreibung

Die Erfindung betrifft ein Fahrzeug, insbesondere ein Zweirad, mit (a) einem Rahmen, (b) einem angetriebenen Rad, insbesondere einem angetriebenen Hinterrad, (c) einem Antrieb, insbesondere mit einem Elektromotor, und (d) einer Federung, mittels der das Rad federnd mit dem Rahmen verbunden ist. Ein derartiges Fahrzeug kann beispielsweise ein Fahrrad, insbesondere ein Geländefahrrad, ein Elektrofahrrad oder ein Pedelec, ein Motorrad, insbesondere ein Geländemotorrad, ein Dreirad (auch Trike genannt) oder ein Quad sein.

Insbesondere bei geländegängigen Fahrzeugen, auf die sich die Erfindung auch bezieht, ist es vorteilhaft, wenn das angetriebene Rad, insbesondere das Hinterrad, einen großen Federweg hat. In solchen Fällen werden Kettentriebe verwendet, um das Antriebsdrehmoment des Antriebs auf das angetriebene Rad zu übertragen.

Bekannt sind auch Zweiräder mit Riemenantrieb, die aber nicht oder deutlich weniger gefedert sind. Der Grund dafür ist, dass es schwierig ist, die Riemenspannung annähernd konstant zu halten, während der Federweg durchlaufen wird.

Der Erfindung liegt die Aufgabe zugrunde, Nachteile im Stand der Technik zu vermindern.

Die Erfindung löst das Problem durch ein gattungsgemäßes Fahrzeug, das (e) einen Riementrieb, der angeordnet ist zum Übertragen eines Antriebsdrehmoments vom Antrieb auf das Hinterrad und einen Riemen, einen Riemenspanner, der angeordnet ist zum Ausüben einer Spannkraft auf ein Leertrum des Riemens, und eine Abtriebsriemenscheibe, die konzentrisch zum Rad angeordnet ist, aufweist, wobei die Federung eine Schwinge aufweist, die in einer Schwingen-Lagerung am Rahmen gelagert ist, ein freies Ende hat, an dem das Hinterrad befestigt ist, und eine Schwingen-Feder zum Vorspannen der Schwinge in eine Ruhelage hat, wobei eine Antriebsriemenscheiben-Drehachse von einer Schwingen-Momentanschwenkachse, um die die Schwinge schwenkt, beabstandet ist.

Vorteilhaft an einem solchen Fahrzeug ist, dass es besonders leise sein kann, insbesondere dann, wenn der Antrieb einen Elektromotor aufweist. Riementriebe erfordern eine möglichst gleichmäßige Riemenspannung, um ein Durchrutschen und/oder eine Beschädigung des Riemens zu vermeiden.

Damit beim Durchlaufen des Federwegs die Spannung im Riementrieb möglichst konstant bleibt, könnte das angetriebene Rad, insbesondere das Hinterrad, schwenkbar um die Antriebsriemenscheiben-Drehachse gelagert werden. Eine derartige Lagerung führt aber in der Regel zu vergleichsweise wenig steifen Fahrzeugen, insbesondere Zweirädern. Dadurch, dass die Antriebsriemenscheiben-Drehachse von der Schwingen-Momentanschwenkachse beabstandet ist, kann die Verbindung der Schwinge mit dem Rahmen eine hohe Steifigkeit haben. Hierbei muss jedoch in Kauf genommen werden, dass sich beim Durchlaufen des Federwegs der Abstand zwischen Abtriebsriemenscheiben-Drehachse und Antriebsriemenscheiben-Drehachse verändert. Es hat sich jedoch herausgestellt, dass dieser Nachteil mittels eines Riemenspannern kompensiert werden kann.

Im Rahmen der vorliegenden Beschreibung wird unter der Schwinge insbesondere eine Struktur verstanden, die am Rahmen befestigt ist und eine Schwenkbewegung des angetriebenen Rads relativ zum Rahmen ermöglicht, aber eine Winkelveränderung zwischen der Antriebsriemenscheiben-Drehachse und der Abtriebsriemenscheiben-Drehachse verhindert. Die Schwinge kann eine Eingelenk-Schwinge sein, eine Zweigelenk-Schwinge oder eine Mehrgelenk-Schwinge. Entsprechend umfasst die Schwingen-Lagerung ein, zwei oder mehr Gelenke oder Gelenkspaare.

Es ist möglich, dass die Schwinge als Einarm-Schwinge ausgebildet ist, also als Schwinge, an der das angetriebene Rad lediglich von einer Seite befestigt ist. Alternativ kann die Schwinge als Gabel ausgebildet sein, an der das angetriebene Rad an zwei Seiten befestigt ist.

Unter der Federung wird insbesondere eine Struktur verstanden, die bei einer Schwenkbewegung des angetriebenen Rads relativ zum Rahmen aus einer Ruhelage heraus eine dieser Schwenkbewegung entgegen wirkende Kraft erzeugt. Günstig, nicht aber notwendig ist es, wenn die Federung zudem ausgebildet ist, diese Schwenkbewegung zu dämpfen. Dazu weist die Federung vorzugsweise einen Stoßdämpfer auf, insbesondere einen hydraulischen Stoßdämpfer.

Wenn die Schwinge um nur eine Schwenkachse schwenkbar gelagert ist, ist die Schwingen-Momentanschwenkachse die Schwingen-Schwenkachse. Wenn im Folgenden von der Schwingen-Momentanschwenkachse gesprochen wird, wird die Schwingen-Schwenkachse als Spezialfall stets mit gemeint.

Ein Abstand zwischen der Antriebsriemenscheiben-Drehachse und der Schwingen-Momentanschwenkachse beträgt beispielsweise zumindest 35 mm, insbesondere zumindest 40 mm, insbesondere zumindest 45 mm, insbesondere zumindest 50 mm, insbesondere zumindest 55 mm, insbesondere zumindest 60 mm, insbesondere zumindest 65 mm. Alternativ oder zusätzlich beträgt der Abstand zwischen der Antriebsriemenscheiben-Drehachse und der Schwingen-Momentanschwenkachse höchstens 105 mm, insbesondere höchstens 100 mm, insbesondere höchstens 95 mm, insbesondere höchstens 90 mm, insbesondere höchstens 85 mm, Insbesondere höchstens 80 mm, insbesondere höchstens 75 mm.

Gemäß einer bevorzugten Ausführungsform besitzt der Riementrieb ein Riemenleitelement. Das Riemenleitelement ist angeordnet zum Ausüben einer Kraft von innen nach außen auf eine Laufseite des Riemens. Vorzugsweise ist das Riemenleitelement benachbart zur Schwingen-Momentanschwenkachse angeordnet. Vorzugsweise übt das Riemenleitelement die Kraft auf das Leertrum aus. Ein solches Riemenleitelement bewirkt, dass die Federung einen langen Federweg haben kann, ohne dass das Leertrum in Kontakt mit der Schwingen-Lagerung kommt.

Unter der Laufseite des Riemens wird die Seite verstanden, die im Betrieb mit den Riemenscheiben in Verbindung steht. Die Laufseite des Riemens weist nach innen.

Zwar ist es möglich, die Schwingen-Momentanschwenkachse so von der Antriebsriemenscheiben-Drehachse beabstandet anzuordnen, dass ein Kontakt zwischen dem Leertrum und der Schwingen-Lagerung stets ausgeschlossen ist. In diesem Fall führt das Durchlaufen des Federwegs aber zu einer deutlichen Positionsveränderung des Riemenspanners. Dies wiederum führt zu einer deutlichen Schwankung der Riemenspannung, was unerwünscht ist.

Vorzugsweise umfasst die Schwingen-Lagerung eine Achse und die Schwingen-Momentanschwenkachse ist eine Schwingen-Drehachse, die durch die Achse verläuft. Vorzugsweise besitzt die Schwingen-Lagerung zwei Lager, insbesondere zwei Wälzlager, besonders bevorzugt zwei Kugellager, mittels derer die Schwinge um die Achse drehbar gelagert ist. Es ist möglich, nicht aber notwendig, dass das Riemenleitelement, das in diesem Fall vorzugsweise als zahnlose Rolle ausgebildet ist, um diese Achse drehbar gelagert ist.

Es ist möglich, nicht aber notwendig, dass das Riemenleitelement die Kraft ständig ausgeübt. Insbesondere ist es ausreichend, wenn das Riemenleitelement bei zumindest einer Stellung der Schwinge die Kraft ausübt. Vorzugsweise übt das Riemenleitelement die Kraft über zumindest 70%, insbesondere über 80%, des Federwegs, vorzugsweise über den gesamten Federweg, der Schwinge aus.

Vorzugsweise ist das Riemenleitelement in gleitreibender oder rollreibender Verbindung mit dem Riemen.

Das Riemenleitelement kann an der Schwinge oder am Rahmen befestigt sein.

Der Riemenspanner ist vorzugsweise an der Schwinge befestigt.

Günstig ist es, wenn der Riemenspanner eine Spannrolle aufweist, die gegen einen Riemenrücken des Riemens drückt. Der Riemenrücken liegt der Laufseite gegenüber und weist entsprechend nach außen. Der Riemenrücken steht nicht in Kontakt mit der Antriebsriemenscheibe und der Abtriebsriemenscheibe.

Vorzugsweise besitzt der Riemenspanner eine Riemenspanner-Feder zum Erzeugen einer Federkraft, insbesondere einer Druckkraft. Die Riemenspanner-Feder kann beispielsweise auf einen Schwenkarm wirken, an dem die Spannrolle befestigt ist.

Alternativ kann die Riemenspanner-Feder direkt mit einer Achse, um die die Spannrolle dreht, verbunden sein und auf diese die Federkraft ausüben.

Der Schwenkarm hat eine Schwenkarm-Drehachse, die vorzugsweise dichter an der Antriebsriemenscheiben-Drehachse liegt als die Spannrollen-Drehachse. Die Spannrolle wird dann insbesondere auf die Abtriebsriemenscheibe zu gedrückt.

Die Riemenspanner-Feder übt eine Ruhe-Federkraft aus, wenn die Schwinge maximal ausgefedert ist. Die Riemenspanner-Feder übt zudem eine Grenz-Federkraft aus, wenn die Schwinge maximal eingefedert ist. Unter dem Merkmal, dass die Schwinge maximal ausgefedert ist, wird verstanden, dass keine externe Kraft auf die Schwinge wirkt. Die Schwinge ist insbesondere dann maximal eingefedert, wenn kein weiterer Federweg zurückgelegt werden kann. Das ist beispielsweise dann der Fall, wenn das Fahrzeug aus großer Höhe auf seine Räder fällt.

Das Riemenleitelement ist vorzugsweise so angeordnet, dass die Ruhe-Federkraft von der Grenz-Federkraft um höchstens 60%, insbesondere höchstens 55%, insbesondere höchstens 50%, insbesondere höchstens 45%, insbesondere höchstens 40%, insbesondere höchstens 35% abweicht. Je kleiner die Abweichung ist, desto konstanter ist die Riemenspannung über den Federweg, also über den Schwingen-Auslenkwinkel.

Der Schwingen-Auslenkwinkel wird berechnet als Winkel zwischen der Geraden durch die Abtriebsriemenscheiben-Drehachse und die Schwingen-Momentanschwenkachse im jeweils betrachteten Auslenk-Zustand der Schwinge und der Geraden durch die Abtriebsriemenscheiben-Drehachse und die Schwingen-Momentanschwenkachse bei ausgefederter Schwinge. Der kleinste Schwingen-Auslenkwinkel ist definitionsgemäß 0°.

Der Riementrieb besitzt eine Antriebsriemenscheibe, die einen Antriebsriemenscheiben-Durchmesser besitzt. Der Abtriebsriemenscheiben-Durchmesser beträgt vorzugsweise zumindest das Zweieinhalbfache, insbesondere zumindest das Dreifache, eines Antriebsriemenscheiben-Durchmessers. Beispielsweise ist der Riemen ein Keilriemen.

Gemäß einer Ausführungsform ist der Riemen ein Zahnriemen, der mit der Abtriebsriemenscheibe und der Antriebsriemenscheibe kämmt. Die Abtriebsriemenscheibe hat eine Abtriebsscheiben-Zahnanzahl an Zähnen, die vorzugsweise zumindest das Zweieinhalbfache, insbesondere zumindest das Dreifache, einer Antriebsriemenscheiben-Zahnanzahl der Antriebsriemenscheibe beträgt. Auf diese Weise ergibt sich ein Untersetzungsgetriebe und der Motor kann mit hoher Drehfrequenz arbeiten dadurch kann der Motor besonders klein und leicht ausgebildet werden.

Durch das Riemenleitelement wird entlang eines Umlenkabschnitts des Riemens eine Umlenkung des Riemens bewirkt. In anderen Worten ist der Umlenkabschnitt derjenige Pfad, entlang dem sich das Leertrum in dem Bereich erstreckt, in dem es vom Riemenleitelement umgelenkt wird. Der Umlenkabschnitt besteht aus gedachten Punkten, die maximal weit von der Schwingen-Momentanschwenkachse beabstandet sind und dennoch keinen Kontakt zum Riemen haben und nicht außerhalb des Riemens liegen. Existiert ein Bereich, in dem das Riemenleitelement Kontakt mit dem Riemen hat, ohne ihn umzulenken, gehört dieser Bereich nicht zum Umlenkabschnitt.

Der Laufpfad eines Riemens beschreibt den gekrümmten oder abgewinkelten Weg, dem ein flexibler Riemen folgt, wenn er in einem Riemenantriebssystem um Riemenscheiben oder Rollen läuft. Der Riemen selbst besteht vorzugsweise aus flexiblem Material wie Gummi oder Hochleistungskunststoffen. Der Laufpfad wird durch die geometrische Anordnung der Riemenscheiben, ihre Größe und die auf den Riemen ausgeübte Spannung bestimmt. Wenn ein Riemen auf Riemenscheiben aufgelegt wird, nimmt er aufgrund des unterschiedlichen Umfangs bei den Riemenscheiben naturgemäß eine gekrümmte Form an. Zusätzlich hat der Laufpfad eines Riemens auf dem Weg von einer zu einer weiteren Riemenscheibe eine im Wesentlichen gerade Form. In einer guten Näherung kann ein Laufpfad mit Hilfe einer Aneinanderreihung von Geraden und Kreisbögen beschrieben werden. Der Umlenkabschnitt ist derjenige Teil des Laufpfads, in dem der Riemen vom Riemenleitelement umgelenkt wird.

Der Umlenkabschnitt hat einen maximalen Abstand von der Schwingen-Momentanschwenkachse. Es ist möglich, dass dieser maximale Abstand vom Schwingen-Auslenkwinkel abhängt. Günstig ist jedoch, wenn der maximale Abstand für alle Schwingen-Auslenkwinkel gleich ist.

Vorzugsweise ist der maximale Abstand größer als der Radius der Antriebsriemenscheibe, insbesondere ist der maximale Abstand größer als das 1,1-fache des Kopfkreisradius.

Alternativ oder zusätzlich ist der maximale Abstand vorzugsweise kleiner als ein Versatz zwischen Schwingen-Momentanschwenkachse und Antriebsriemenscheiben-Drehachse.

Vorzugsweise ist das Riemenleitelement so angeordnet, dass es über zumindest 70%, insbesondere zumindest 80%, insbesondere zumindest 90%, eines Schwingen-Auslenkwinkelintervalls Kontakt mit dem Riemen hat. Das Schwingen-Auslenkwinkelintervall beginnt mit dem kleinstmöglichen Schwingen-Auslenkwinkel, der definitionsgemäß 0° ist, und endet mit dem maximalen Schwingen-Auslenkwinkel αₘₐₓ. Die Prozentangabe beziehen sich auf das Winkelintervall. Vorzugsweise beträgt der maximale Schwingen-Auslenkwinkel αₘₐₓ zumindest 20°, insbesondere zumindest 30°, insbesondere zumindest 35°, insbesondere zumindest 45°. Vorzugsweise beträgt der maximale Schwingen-Auslenkwinkel αₘₐₓ höchstens 60°, insbesondere höchstens 55°, insbesondere zumindest 50°.

Gemäß einer alternativen Ausführungsform ist das Riemenleitelement angeordnet zum Ausüben der Kraft von innen nach außen auf die Laufseite des Riemens nur dann, wenn die Schwinge den Negativfederweg oder mindestens einen Teil des Negativfederwegs durchlaufen hat. Der Begriff des Negativfederwegs wird unten stehend erläutert.

Als Lauffläche eines Riemens wird der Teil des Riemens bezeichnet, der in direktem Kontakt mit den Riemenscheiben oder Rollen in einem Riementrieb steht. Es ist der Teil des Riemens, der die Leistung oder Bewegung von der treibenden Antriebsriemenscheibe auf die angetriebene Abtriebsriemenscheibe überträgt. Die Eigenschaften und der Zustand der Lauffläche sind wichtig für die Leistung und die Langlebigkeit des Riemens und die Effizienz des Riemenantriebssystems. Die Lauffläche eines Riemens besteht vorzugsweise aus einem haltbaren und verschleißfesten Material. Übliche Materialien für Riemenlaufflächen sind Gummi, synthetische Verbindungen oder andere Materialien wie zum Beispiel Polyurethan, die für einen guten Reibungskontakt mit den Riemenscheiben sorgen. Die Lauffläche eines Riemens kann ein Profil oder eine bestimmte Form haben, die an die Rille oder Form der Riemenscheiben angepasst ist. Keilriemen haben zum Beispiel ein V-förmiges Profil und laufen in Scheiben mit V-Rillen. Zahnriemen haben ein Zahnprofil, das in die entsprechenden Zähne der Riemenscheiben eingreift.

Die richtige Riemenspannung innerhalb des Riemens ist wichtig, um sicherzustellen, dass die Lauffläche des Riemens einen guten Kontakt zu den Riemenscheiben hat. Eine unzureichende Spannung kann zu Schlupf führen, während eine zu hohe Spannung vorzeitigen Verschleiß und eine erhöhte Belastung der Lager verursachen kann. Es ist vorteilhaft an der Erfindung, dass die Spannung des Riemens in jedem Betriebszustand der Federung und des elektrischen Antriebs in den erlaubten Grenzen gehalten werden kann.

Gemäß einer Ausführungsform beträgt der Negativfederweg zumindest 20%, insbesondere zumindest 25%, besonders bevorzugt zumindest 29%, des Schwingen-Auslenkwinkelintervalls. Vorzugsweise beträgt der Negativfederweg höchstens 35% des Schwingen-Auslenkwinkelintervalls. Der Negativfederweg ist das Intervall des Schwingen-Auslenkwinkels von 0° bis zum Normal-Schwingenauslenkwinkel. Der Normal-Schwingenauslenkwinkel ist derjenige Schwingen-Auslenkwinkel, der sich einstellt, wenn eine Person mit Auslegungsgewicht auf einem Sattel des Fahrzeugs sitzt. Das Auslegungsgewicht ist dem Fahrzeug zugeordnet. Vorzugsweise besitzt das Fahrzeug ein zugeordnetes Dokument, in dem das Normal-Gewicht angegeben ist.

Der Negativfederweg ist ein wichtiger Parameter bei der Einstellung der Federung. Er gibt den Betrag an, um den die Federung einfedert, wenn das Gewicht eines Fahrers mit Auslegungsgewicht auf das Fahrzeug, insbesondere das Fahrrad oder Motorrad, einwirkt. Die richtige Einstellung des Negativfederwegs ist wichtig für optimales Handling, Komfort und Kontrolle des Fahrzeugs. Das ideale Maß des Negativfederwegs kann je nach Fahrzeugtyp, Verwendungszweck, Fahrergewicht und persönlichen Vorlieben variieren. Normalerweise sollte der Negativfederweg auf etwa 25 % des gesamten Federwegs eingestellt sein.

Off-Road-Fahrzeuge, auf die sich die Erfindung insbesondere bezieht, benötigen oft mehr Negativfederweg, die im Bereich von 30% bis 35% des gesamten Federwegs liegen.

Die richtige Einstellung des Negativfederwegs ist in Kombination mit einer möglichst konstanten Riemenspannung über den gesamten Federweg entscheidend für ein ausgewogenes und reaktionsschnelles Fahrverhalten. Dadurch wird sichergestellt, dass die Federung angemessen belastet wird, so dass das Fahrrad Unebenheiten, Kurven und andere Straßenbedingungen betriebssicher bewältigen kann.

Vorzugsweise ist das Riemenleitelement eine Rolle. Die Rolle besitzt vorzugsweise keine Zähne. Günstig ist es, wenn die Rolle koaxial zur Schwingen-Momentanschwenkachse angeordnet ist. Vorzugsweise ist ein Rollen-Durchmesser der Rolle mindestens so groß wie der Antriebsriemenscheiben-Durchmesser.

Gemäß einer Ausführungsform besitzt das Riemenleitelement eine radial außen angebrachte Elastomerschicht. Beispielsweise besitzt das Riemenleitelement einen radial außenangebrachten O-Ring, der auf einem Rollenkörper aufgebracht ist. Der Rollenkörper ist drehbar gelagert.

Vorzugsweise besitzt der Antrieb einen Elektromotor und ein Getriebe, das mit dem Elektromotor verbunden ist. Das Getriebe hat vorzugsweise eine Getriebe-Abtriebswelle, die mit der Antriebsriemenscheibe koaxial verbunden ist.

Im unbeladenen Zustand des Fahrzeugs liegt die Getriebe-Abtriebswelle vorzugsweise oberhalb einer Motordrehachse des Elektromotors. Alternativ oder zusätzlich liegt im unbeladenen Zustand des Fahrzeugs eine Abtriebsriemenscheiben-Drehachse vorzugsweise unterhalb der Antriebsriemenscheiben-Drehachse, insbesondere unterhalb der Motordrehachse.

Vorzugsweise liegt die Schwingen-Momentanschwenkachse im unbeladenen Zustand des Fahrzeugs unterhalb der Antriebsriemenscheiben-Drehachse. Alternativ oder zusätzlich liegt im unbeladenen Zustand des Fahrzeugs die Abtriebsriemenscheiben-Drehachse unterhalb einer Geraden durch die Antriebsriemenscheiben-Drehachse und die Schwingen-Momentanschwenkachse.

Die Getriebewelle liegt vorzugsweise nicht koaxial zur Motorwelle des Elektromotors. Das Getriebe ist vorzugsweise ein Untersetzungsgetriebe. Ein Untersetzungsverhältnis beträgt vorzugsweise zumindest 1:2, insbesondere zumindest 1:3. Das Untersetzungsverhältnis beträgt vorzugsweise höchstens 1:6, insbesondere zumindest 1:5.

Die Spannrolle hat einen Umschlingungswinkel, der in der Regel vom Schwingen-Auslenkwinkel abhängt. Ein Ruhe-Umschlingungswinkel, den die Spannrolle dann hat, wenn die Schwinge maximal ausgefedert ist, weicht vorzugsweise um höchstens 30°, insbesondere höchstens 20°, insbesondere höchstens 15°, vorzugsweise um höchstens 10°, von einem Grenz-Umschlingungswinkel ab, den die Spannrolle dann hat, wenn die Schwinge maximal eingefedert ist.

Alternativ oder zusätzlich weicht der Ruhe-Umschlingungswinkel vorzugsweise um höchstens 30°, insbesondere höchstens 20°, insbesondere höchstens 15°, insbesondere um höchstens 10°, von einem Extrem-Umschlingungswinkel ab, bei dem die Funktion, die den Umschlingungswinkel in Abhängigkeit vom Schwingen-Auslenkwinkel angibt, ein lokales Extremum durchläuft. Auf diese Weise verändert sich die Riemenspannung nur wenig.

Vorzugsweise ist der Riemenspanner so angeordnet, dass ein Spannabschnitt-Winkel γ zwischen dem Leertrum in einem Spann-Abschnitt zwischen der Spannrolle und dem Riemenleitelement einerseits und der Geraden G andererseits in Abhängigkeit vom Schwingen-Auslenkwinkel einen Minimalwert annimmt, der höchstens 15°, insbesondere höchstens 10°, insbesondere höchstens 8°, insbesondere höchstens 5°, beträgt. Auf diese Weise verändert sich die Riemenspannung über den Federweg nur wenig.

Günstig ist es, wenn das Leertrum im Abschnitt zwischen der Spannrolle und dem Riemenleitelement unter einem Abdräng-Winkel δ zu einer Tangente T an die Unterseite der Abtriebsriemenscheibe und die Unterseite der Antriebsriemenscheibe verläuft. Vorzugsweise beträgt dieser Abdräng-Winkel δ für zumindest einen Schwingen-Auslenkwinkel zumindest 5°, insbesondere zumindest 8°, besonders bevorzugt zumindest 10°. Vorzugsweise ist der Abdräng-Winkel δ für maximal 25°. Der Abdräng-Winkel δ ist also der Winkel, um den das Leertrum durch den Riemenspanner von dem Pfad abgedrängt wird. Auf diese Weise wird ein großer Umschlingungswinkel an der Abtriebsriemenscheibe erreicht, sodass ein großes Drehmoment übertragen werden kann.

Vorzugsweise besitzt die Federung einen Stoßdämpfer, insbesondere mit hydraulischer Dämpfung. Die vom Stoßdämpfer aufgebrachte Kraft addiert sich insbesondere zur Federkraft der Schwingen-Feder.

Günstig ist es, wenn im ausgefederten Zustand der Schwinge eine Projektion der Spannrollen-Drehachse auf die Gerade durch die Antriebsriemenscheiben-Drehachse einen Abstand von höchstens dem 0,4-fachen des Abstands von Abtriebsriemenscheiben-Drehachse zu der Schwingen-Momentanschwenkachse zur Abtriebsriemenscheiben-Drehachse hat. In anderen Worten ist die Spannrolle weiter zur Abtriebsriemenscheibe benachbart als zur Antriebsriemenscheibe das ermöglicht einen großen Umschlingungswinkel an der Abtriebsriemenscheibe.

Vorzugsweise beträgt ein Spannwinkel Ω, der der Winkel zwischen dem Leertrum im Spann-Abschnitt A und der Geraden G durch die Antriebsriemenscheiben-Drehachse D₃₆ und die Schwingen-Momentanschwenkachse S₃₂ ist, höchstens 13°, insbesondere höchstens 8°.

Im Folgenden wird die Erfindung anhand der beigefügten Zeichnungen näher erläutert. Dabei zeigt
- Figur 1: ein erfindungsgemäßes Fahrzeug in einer maßstabsgerechten Ansicht gemäß einer ersten Ausführungsform in Form eines Elektro-Motorrads,
- Figur 2a: eine Detailansicht des Fahrzeugs gemäß Figur 1,
- Figur 2b: einen Querschnitt gemäß Figur 2a,
- Figur 3: eine schematische Ansicht des Riementriebs
- Figur 4a: den Laufpfad des Riemens, wenn die Schwinge komplett ausgefedert ist,
- Figur 4b: die Laufseite des Riemens gemäß Figur 4a, wenn die Schwinge komplett eingefedert ist,
- Figur 5a: einen Ausschnitt eines erfindungsgemäßen Fahrzeugs in einer maßstabsgerechten Ansicht gemäß einer zweiten Ausführungsform in Form eines Elektrofahrrads,
- Figur 5b: einen Ausschnitt aus der Ansicht gemäß Figur 5a und
- Figur 6: eine Darstellung der Abhängigkeit des Spannrollen-Umschlingungswinkels β vom Schwingen-Schwenkwinkel α.

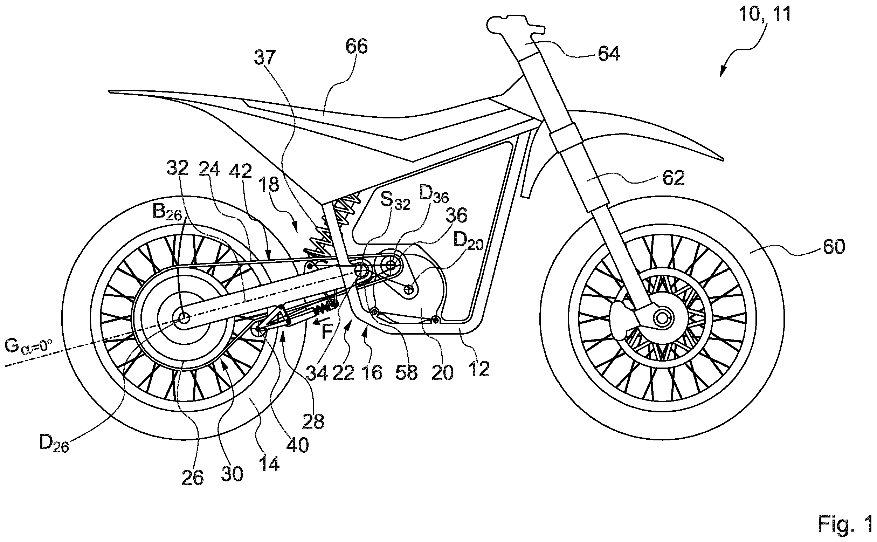

Figur 1 zeigt ein erfindungsgemäßes Fahrzeug 10 in Form eines Motorrads 11, das einen Rahmen 12 und ein angetriebenes Rad 14, im vorliegenden Fall in Form eines angetriebenen Hinterrads, sowie einen Antrieb 16 aufweist. Mittels einer Federung 18 ist das Rad 14 federnd am Rahmen 12 gelagert. Der Antrieb 16 besitzt einen Elektromotor 20. Das Rad 14 wird mittels eines Riementriebs 22 vom Elektromotor 20 angetrieben. Der Elektromotor hat eine Motor-Drehachse D₂₀.

Der Riementrieb 22 besitzt einen Riemen 24, eine Abtriebsriemenscheibe 26 und einen Riemenspanner 28 zum Spannen des Riemens 24. Dazu übt der Riemenspanner 28 eine Kraft auf ein Leertrum 30 aus.

Die Federung 18 besitzt eine Schwinge 32, die in einer Schwingen-Lagerung 34 am Rahmen 12 befestigt ist. Die Schwingen-Lagerung 34 bewirkt, dass eine Abtriebsriemenscheiben-Drehachse D₂₆ entlang einer Bahnkurve B₂₆ schwenken kann. Die Schwinge 32 schwenkt dabei um eine Schwingen-Momentanschwenkachse S₃₂. Da die Schwinge 32 in der in Figur 1 gezeigten Ausführungsform in einem Drehlager 35 gelagert ist, ist die Schwingen-Momentanschwenkachse eine Schwingen-Schwenkachse. Die Abtriebsriemenscheiben-Drehachse D₂₆ entspricht einer Rad-Drehachse D₁₄ des angetriebenen Rads 14.

Der Riementrieb 22 besitzt eine Antriebsriemenscheibe 36, die um eine Antriebsriemenscheiben-Drehachse D₃₆ rotiert. Die Antriebsriemenscheibe 36 wird vom Motor 20 angetrieben.

Eine Schwingen-Feder 37 spannt die Schwinge 32 in eine in Figur 1 gezeigte Ruhelage vor, in der auf das Rad 14 keine externen Kräfte wirken. Ein solcher Fall liegt beispielsweise dann vor, wenn das Fahrzeug 10 hängt. In diesem Fall gilt für einen Schwingen-Auslenkwinkel α = α₀ = 0°. Eine Gerade G_{α}=_{0°} (=G_{0°}) durch die Abtriebsriemenscheiben-Drehachse D₃₆ und die Schwingen-Momentanschwenkachse S₃₂ verläuft in diesem Zustand wie in Figur 1 zeigt. Federt die Schwingen-Feder 37 ein, führt das zur Geraden Gα' durch die Abtriebsriemenscheiben-Drehachse D₃₆ und die Schwingen-Momentanschwenkachse S₃₂. Der Schwingen-Auslenkwinkel α' ist der Winkel zwischen den Geraden G0° und Gα'.

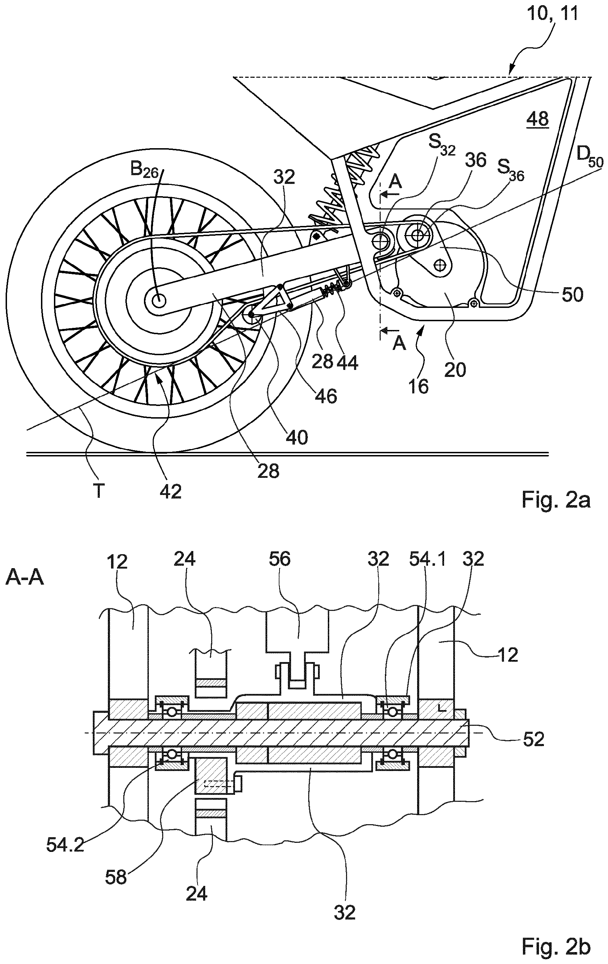

Figur 2a zeigt, dass der Riemenspanner 28 an der Schwinge 32 befestigt sein kann und eine Spannrolle 40 aufweisen kann, die gegen einen Riemenrücken 42 drückt, der einer Laufseite 43 gegenüberliegt. Der Riemenspanner 28 kann eine Riemenspanner-Feder 44 aufweisen, die auf einen Schwenkarm 46 wirkt, an dem die Spannrolle 40 befestigt ist.

Unabhängig von den übrigen beschriebenen Merkmalen der Ausführungsform ist es günstig, wenn die Riemenspanner-Feder 44 eine Druckkraft auf den Schwenkarm 46 ausübt, die zumindest im Wesentlichen parallel zum Leertrum 30 im Bereich zwischen der Spannrolle 40 und der Antriebsriemenscheibe 36 verläuft. Hierunter wird insbesondere verstanden, dass ein Winkel zwischen dem Vektor der Druckkraft und dem Leertrum in diesem Bereich höchstens 15°, insbesondere 10°, bevorzugt höchstens 5°, beträgt.

Das Fahrzeug 10 (hier: das Motorrad 11), besitzt vorzugsweise einen Akkumulator 48, der mit dem Motor 20 zum Versorgen mit elektrischer Energie verbunden ist. Der Antrieb 16 kann ein Getriebe 50 aufweisen, das vom Motor 20 angetrieben wird und das seinerseits die Antriebsriemenscheibe antreibt. Eine Getriebe-Drehachse D₅₀ entspricht vorzugsweise der Antriebsriemenscheiben-Drehachse D₃₆.

Figur 2b zeigt die Ansicht A-A aus Figur 2a durch die eine Achse 52, die am Rahmen 12 starr befestigt ist. Die Schwinge 32 ist mittels zweier Wälzlager 54.1, 54.2, und einer Achse 52 drehbar gelagert. In Blickrichtung hinter der Achse 32 ist ein Stoßdämpfer 56 der Federung 16 zu erkennen.

Figur 2b zeigt ein Riemenleitelement 58, das an der Schwinge 32 befestigt ist. Im vorliegenden Fall ist das Riemenleitelement 58 als Gleitelement ausgebildet, an dem der Riemen 24 abgeleitet wird. Alternativ kann das Riemenleitelement 58 als Rolle ausgebildet sein. Diese Rolle kann an der Achse 52 drehbar gelagert sein. Das Riemenleitelement 58 ist benachbart zur Schwingen-Momentanschwenkachse S32 angeordnet.

Die folgenden, in Figur 1 gezeigten Bestandteile der Ausführungsform des Fahrzeugs 10 sind optional: Das Fahrzeug 10 kann ein zweites Rad, insbesondere ein Vorderrad 60, eine Radaufhängung 62, insbesondere eine Radgabel und einen Lenker 64 sowie einen Sitz 66 für einen Fahrer aufweisen.

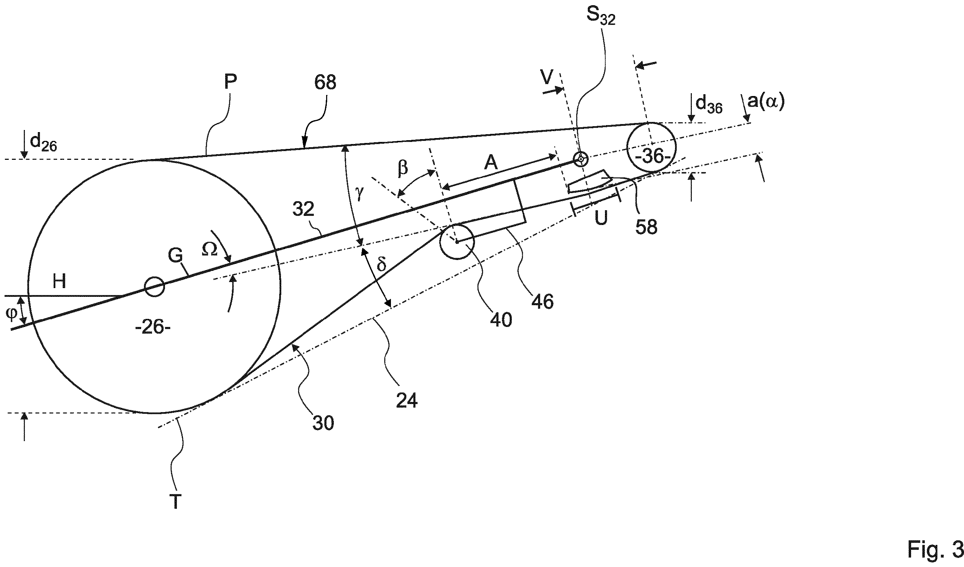

Figur 3 zeigt eine schematische Ansicht eines Laufpfads P des Riemens 24 mit dem Leertrum 30 und einem Lasttrum 68. Die Antriebsriemenscheibe 36 hat einen Antriebsriemenscheiben-Durchmesser d₃₆, die Abtriebsriemenscheibe 26 hat einen Abtriebsriemenscheiben-Durchmesser d₂₆. Es gilt vorzugsweise d₃₆/d₂₆ > 2.

Das schematisch eingezeichnete Riemenleitelement 58 bewirkt eine Umlenkung des Riemens 24. Der Bereich, in dem diese Umlenkung erfolgt, wird Umlenkabschnitt U genannt. Dieser Umlenkabschnitt U hat einen Abstand a(α) von der Schwingen-Momentanschwenkachse S₃₂, der sich mit dem Schwingen-Schwenkwinkel α ändern kann, jedoch nicht ändern muss und einen maximalen Abstand aₘₐₓ einnehmen kann. Dieser maximale Abstand aₘₐₓ ist vorzugsweise größer als das 1,1-fache eines Radius r₃₆ = d₃₆/2 der Antriebsriemenscheibe 36. Günstig ist es, wenn ein Versatz V zwischen der Schwingen-Momentanschwenkachse S₃₂ und der Antriebsriemenscheiben-Drehachse D₃₆ größer ist als der maximale Abstand aₘₐₓ.

Figur 3 zeigt, dass die Spannrolle 40 einen Spannrollen-Umschlingungswinkel β hat. Der Spannrollen-Umschlingungswinkel β ist derjenige Winkel, den der Umfangsbereich der Spannrolle 40 einnimmt, die mit dem Leertrum 30 in Kontakt steht. Der Spannrollen-Umschlingungswinkel β hängt vom Schwingen-Schwenkwinkel α ab. Der Spannrollen-Umschlingungswinkel β zu α = 0° ist der Ruhe-Umschlingungswinkel β₀. Der Spannrollen-Umschlingungswinkel βₘₐₓ zum maximalen Schwingen-Schwenkwinkel αₘₐₓ ist der Grenz-Umschlingungswinkel βₘₐₓ.

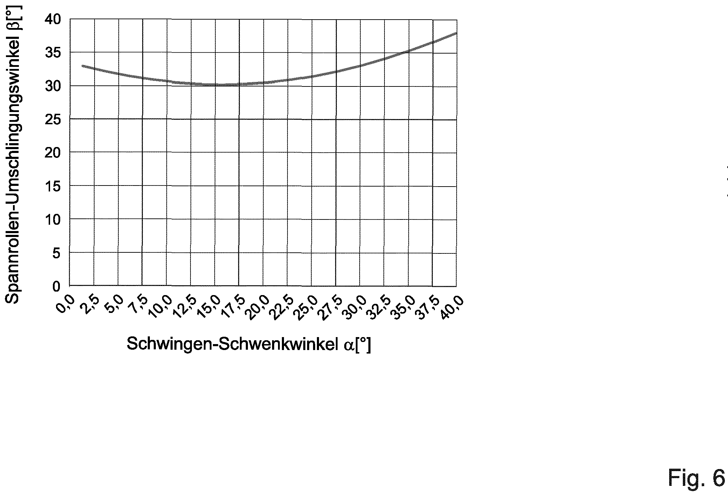

Die mathematische Funktion β(α), die den Spannrollen-Umschlingungswinkel β in Abhängigkeit vom Schwingen-Schwenkwinkel α angibt, ist in Figur 6 gezeigt und durchläuft ein lokales Extremum βₑₓₜ, das Extrem-Umschlingungswinkel genannt wird.

Es ist günstig, wenn sich der Spannrollen-Umschlingungswinkel bei variierenden Schwingen-Schwenkwinkel α nicht zu stark ändert. Vorzugsweise beträgt die Differenz zwischen Ruhe-Umschlingungswinkel β₀ und Grenz-Umschlingungswinkel höchstens 30°, vorzugsweise höchstens 20°, und/oder eine Differenz zwischen Ruhe-Umschlingungswinkel β₀ und Extrem-Umschlingungswinkel ebenfalls höchstens 20°, vorzugsweise höchstens 10°.

Zwischen der Spannrolle 40 und dem Umlenkabschnitt U verläuft ein Spann-Abschnitt A des Laufpfads P. Der Spann-Abschnitt A verläuft unter einem Spannabschnitts-Winkel γ zum Lasttrum 68. Günstig ist es, wenn der Spannabschnitt-Winkel γ höchstens 15°, insbesondere höchstens 10°, beträgt.

Als Spannwinkel Ω sei der Winkel zwischen dem Leertrum im Bereich Spann-Abschnitt A und der Geraden G durch die Antriebsriemenscheiben-Drehachse D₃₆ und die Schwingen-Momentanschwenkachse S₃₂ bezeichnet. Die Ausgestaltung ist vorteilhaft, wenn der Spannwinkel Ω höchstens 13°, insbesondere höchstens 8°, beträgt.

Der Umlenkabschnitt U verläuft unter einem Abdräng-Winkel δ zu einer Tangente T an die Unterseite der Abtriebsriemenscheibe 26 und die Unterseite der Antriebsriemenscheibe 36. Je größer der Abdräng-Winkel δ ist, desto stärker verändert der Riemenspanner 28 den Laufpfad P. Vorzugsweise beträgt der Abdräng-Winkel zumindest δ =10°, wenn die Schwinge 32 maximal eingefedert ist.

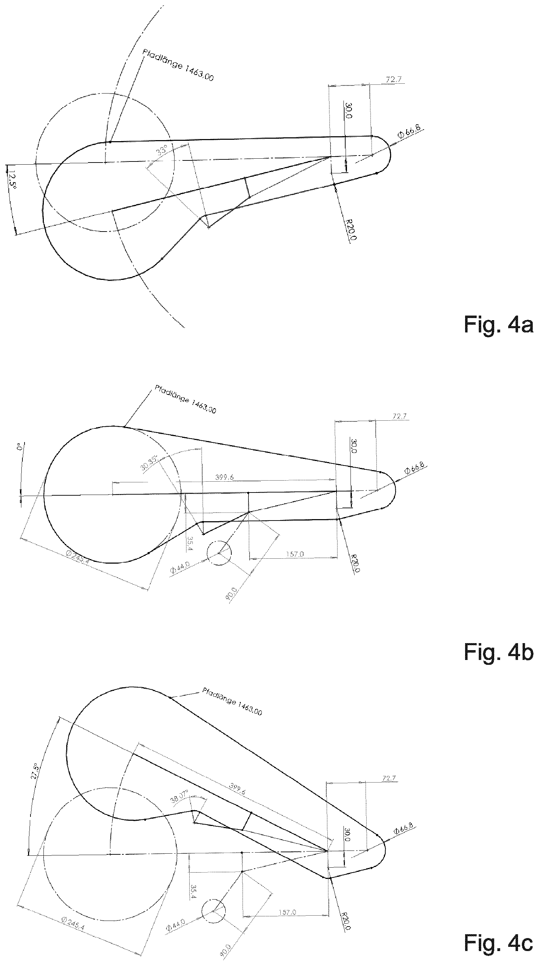

Figur 4a zeigt den Laufpfad P in einer maßstabsgerechten Darstellung in dem Zustand, wenn die Schwinge 32 vollständig ausgefedert ist, also für den Schwingen-Schwenkwinkel α₀.

Figur 4b zeigt den Laufpfad P in dem Zustand, in dem die Schwinge horizontal verläuft.

Figur 4c zeigt den Laufpfads P in dem Zustand, wenn die Schwinge 32 vollständig eingefedert ist, also für den Schwingen-Schwenkwinkel αₘₐₓ.

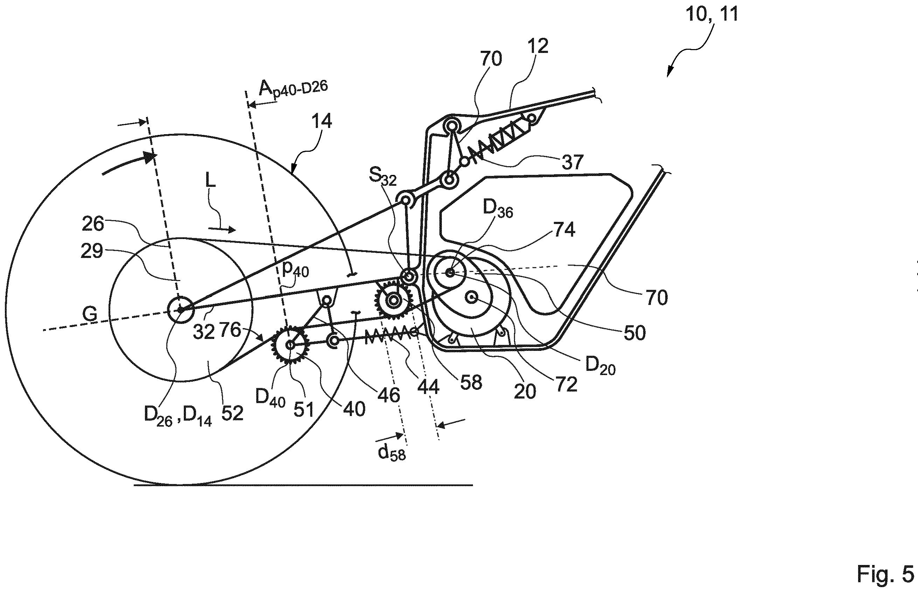

Figur 5 zeigt einen Ausschnitt eines erfindungsgemäßen Fahrzeugs 10 in Form eines Motorrads 11, bei dem die Schwingen-Feder 37 auf einen Schwenkhebel 70 wirkt. Das Motorrad 11 besitzt eine Batterie 70, die den Elektromotor 20 mit elektrischer Energie versorgt. Eine Motorwelle 72 des Elektromotors 20 treibt das Getriebe 50 an. Eine Getriebe-Abtriebswelle 74 des Getriebes treibt die Antriebsriemenscheibe 36 an.

Das Riemenleitelement 58, das als Zahnrad ausgebildet ist, aber auch als Rolle ausgebildet sein kann, steht in Kontakt mit einer Riemenlauffläche 76 des Riemens 24.

Eingezeichnet ist eine Projektion p₄₀ einer Spannrollen-Drehachse D₄₀ auf die Gerade G durch die Antriebsriemenscheiben-Drehachse D₃₆ und die Schwingen-Momentanschwenkachse S₃₂. Diese Projektion p₄₀, also ein Punkt auf der Geraden G, hat im ausgefederten Zustand der Schwinge 32 einen Abstand A_{p40-D26} zur Abtriebsriemenscheiben-Drehachse D₂₆. Dieser Abstand A_{p40-D26} beträgt vorzugsweise höchstens das 0,4-fache des Abstands von Abtriebsriemenscheiben-Drehachse D₂₆ zur Schwingen-Momentanschwenkachse S₃₂.

Figur 6 zeigt eine Darstellung der Abhängigkeit des Spannrollen-Umschlingungswinkels β vom Schwingen-Schwenkwinkel α. Die entsprechenden Werte finden sich in der folgenden Tabelle.

| Schwingen-Schwenkwinkel **α(°)** | **Winkel φ der Geraden G zur Horizontalen (°)** | Spannrollen-Umschlingungswinkel β **(°)** | **Bemerkung** |
|---|---|---|---|
| α₀ = 0,0 | -12,5 | 33,00 | β₀, vollständig ausgefedert |
| 2,5 | -10 | 32,19 | |
| 5,0 | -7,5 | 31,51 | |
| 7,5 | -5 | 30,97 | |
| 10,0 | -2,5 | 30,58 | |
| 12,5 | 0 | 30,35 | Schwinge horizontal |
| 15,0 | 2,5 | 30,28 | Extrem-Umschlingungswinkel βₑₓₜ |
| 17,5 | 5 | 30,37 | |
| 20,0 | 7,5 | 30,62 | |
| 22,5 | 10 | 31,04 | |
| 25,0 | 12,5 | 31,61 | |
| 27,5 | 15 | 32,34 | |
| 30,0 | 17,5 | 33,22 | |
| 32,5 | 20 | 34,24 | |
| 35,0 | 22,5 | 35,4 | |
| 37,5 | 25 | 36,68 | |
| 40,0 | 27,5 | 38,07 | vollständig eingefedert |

**Bezugszeichenliste**

| | | | | | |
|---|---|---|---|---|---|
| | | | | | |
| | 10 | Fahrzeug | | 86 | Hilfs-Riemenscheibe |
| | 12 | Rahmen | | | |
| | 14 | Rad, Hinterrad | | α | Schwingen-Schwenkwinkel |
| | 16 | Antrieb | | α₀ | minimaler Schwingen-Schwenk- |
| | 18 | Federung | | | winkel (Schwinge maximal aus- |
| | | | | | gefedert) |
| | 20 | Motor, Elektromotor | | αₘₐₓ | maximaler Schwingen-Schwenk- |
| | 22 | Riementrieb | | | winkel (Schwinge maximal einge- |
| | 24 | Riemen | | | federt) |
| | 26 | Abtriebsriemenscheibe | | β | Spannrollen-Umschlingung- |
| | 28 | Riemenspanner | | | swinkel |
| | | | | β₀ | Ruhe-Umschlingungswinkel |
| | 30 | Leertrum | | βₑₓₜ | Extrem-Umschlingungswinkel |
| | 32 | Schwinge | | βₘₐₓ | Grenz-Umschlingungswinkel |
| | 34 | Schwingen-Lagerung | | γ | Spannabschnitt-Winkel |
| | 35 | Drehlager | | δ | Abdräng-Winkel |
| | 36 | Antriebsriemenscheibe | | φ | Winkel der Geraden G zur Hori- |
| | 37 | Schwingen-Feder | | | zontalen |
| | 38 | Vorderrad | | Ω | Spannwinkel |
| | | | | a | Abstand vom Umlenkabschnitt |
| | 40 | Spannrolle | | | zur Schwingen-Momentan- |
| | 42 | Riemenrücken | | | schwenkachse |
| | 43 | Laufseite | | aₘₐₓ | maximaler Abstand |
| | 44 | Riemenspanner-Feder | | A | Spann-Abschnitt |
| | 46 | Schwenkarm | | d₃₆ | Antriebsriemenscheiben-Durch- |
| | 48 | Akkumulator | | | messer |
| | | | | d₂₆ | Abtriebsriemenscheiben-Durch- |
| | 50 | Getriebe | | | messer |
| | 52 | Achse | | d₅₈ | Riemenleitelement-Durchmesser |
| | 54 | Wälzlager | | D₁₄ | Rad-Drehachse |
| | 56 | Stoßdämpfer | | D₂₀ | Motor-Drehachse |
| | 58 | Riemenleitelement | | D₂₆ | Abtriebsriemenscheiben-Dreh- |
| | | | | 86 | achse |
| | 60 | Vorderrad | | D₃₆ | Antriebsriemenscheibe- |
| | 62 | Radaufhängung | | | Drehachse |
| | 64 | Lenker | | D₄₀ | Spannrollen-Drehachse |
| | 66 | Sitz | | F | Federkraft |
| | 68 | Lasttrum | | G | Gerade |
| | | | | H | Horizontale |
| | 70 | Batterie | | L | Laufrichtung |
| | 72 | Motorwelle | | p₄₀ | Projektion |
| | 74 | Getriebe-Abtriebswelle | | P | Laufpfad |
| | 76 | Riemenlauffläche | | S₃₂ | Schwingen-Momentanschwenk- |
| | 78 | Elektrofahrrad Tretkurbel | | | achse |
| | | | | T | Tangente |
| | 80 | Tretkurbel | | U | Umlenkabschnitt |
| | 82 | Pedale | | | |
| | 84 | Pedal-Riemenscheibe | | | |
| | | | | | |
| | | | | | |

## Patentansprüche

1. Fahrzeug (10), insbesondere Zweirad, mit
(a) einem Rahmen (12),
(b) einem angetriebenen Rad (14), insbesondere einem angetriebenen Hinterrad,
(c) einem Antrieb (16), insbesondere mit einem Elektromotor (20), und
(d) einer Federung (18), mittels der das Rad (14) federnd mit dem Rahmen (12) verbunden ist,
**gekennzeichnet durch**
(e) einen Riementrieb (22), der
(i) angeordnet ist zum Übertragen eines Antriebsdrehmoments vom Antrieb (16) auf das Rad (14) und
(ii) eine Antriebsriemenscheibe (36),
(iii) einen Riemen (24),
(iv) einen Riemenspanner (28), der angeordnet ist zum Ausüben einer Spannkraft auf ein Leertrum (30) des Riemens (24), und
(v) eine Abtriebsriemenscheibe (26), die konzentrisch zum Rad (14) angeordnet ist, aufweist,
(f) wobei die Federung (18) eine Schwinge (32) aufweist,
(i) die in einer Schwingen-Lagerung (34) am Rahmen (12) gelagert ist,
(ii) ein freies Ende hat, an dem das Rad (14) befestigt ist, und
(iii) eine Schwingen-Feder (37) zum Vorspannen der Schwinge (32) in einer Ruhelage hat,
(g) wobei eine Antriebsriemenscheiben-Drehachse (Dse) von einer Schwingen-Momentanschwenkachse (S₃₂), um die die Schwinge (32) schwenkt, beabstandet ist.

2. Fahrzeug (10) nach Anspruch 1, **dadurch gekennzeichnet, dass** der Riementrieb (22) ein Riemenleitelement (58) aufweist, das
(i) benachbart zur Schwingen-Momentanschwenkachse (S₃₂) angeordnet ist und
(ii) angeordnet ist zum Ausüben einer Kraft von innen nach außen auf eine Laufseite (43) des Riemens (24).

3. Fahrzeug (10) nach einem der vorstehenden Ansprüche, **dadurch gekennzeichnet, dass**
(a) der Riemenspanner (28) an der Schwinge (32) befestigt ist und/oder
(b) eine Spannrolle (40) aufweist, die gegen einen Riemenrücken (42) des Riemens (24) drückt und/oder
(c) der Riemenspanner (28) eine Riemenspanner-Feder (44), insbesondere eine Druckfeder, zum Erzeugen einer Federkraft (F) aufweist.

4. Fahrzeug (10) nach Anspruch 3, **dadurch gekennzeichnet, dass**
(a) die Riemenspanner-Feder (44) eine Ruhe-Federkraft ausübt, wenn die Schwinge (32) maximal ausgefedert ist, und eine Grenz-Federkraft ausübt, wenn die Schwinge (32) maximal eingefedert ist, und
(b) das Riemenleitelement (58) so angeordnet ist, dass die Ruhe-Federkraft von der Grenz-Federkraft um höchstens 60%, vorzugsweise 35%, abweicht.

5. Fahrzeug (10) nach einem der vorstehenden Ansprüche, **dadurch gekennzeichnet, dass** der Riementrieb (22)
(a) eine Antriebsriemenscheibe (36) aufweist und
ein Abtriebsriemenscheiben-Durchmesser (d₂₆) zumindest das Zweieinhalbfache, insbesondere zumindest das Dreifache, eines Antriebsriemenscheiben-Durchmessers (d36) beträgt und/oder
(a) der Riemen (24) ein Zahnriemen ist, der mit der Abtriebsriemenscheibe (26) und der Antriebsriemenscheibe (36) kämmt, und
eine Abtriebsriemenscheiben-Zahnanzahl an Zähnen der Abtriebsriemenscheibe (26) zumindest das Zweieinhalbfache, insbesondere zumindest das Dreifache, einer Antriebsriemenscheiben-Zahnanzahl beträgt.

6. Fahrzeug (10) nach einem der Ansprüche 2 bis 5, **dadurch gekennzeichnet, dass**
(a) das Riemenleitelement (58) entlang eines Umlenkabschnitts (U) des Riemens (24) eine Umlenkung des Riemens (24) bewirkt
(b) der Umlenkabschnitt (U) in dem Bereich des Riemenleitelements (58) einen maximalen Abstand (αₘₐₓ) von einer Schwingen-Momentanschwenkachse (S₃₂)hat, der
(i) größer ist als der Radius der Antriebsriemenscheibe (36), vorzugsweise größer ist als das 1,1-fache des Radius der Antriebsriemenscheibe (36) und
(ii) kleiner ist als ein Versatz zwischen Schwingen-Momentanschwenkachse (S₃₂) und Antriebsriemenscheiben-Drehachse (D₃₆), vorzugsweise kleiner ist als der Antriebsriemenscheiben- Durchmesser (d₃₆).

7. Fahrzeug (10) nach einem der Ansprüche 2 bis 6, **dadurch gekennzeichnet, dass**
(a) das Riemenleitelement (58) angeordnet ist zum Ausüben der Kraft von innen nach außen auf die Laufseite (43) des Riemens (24), nur wenn die Schwinge (32) um mehr als einen vorgegebenen Schwingen-Auslenkwinkel ausgelenkt ist, und/oder
(b) das Riemenleitelement (58) so angeordnet ist, dass es über zumindest 70%, insbesondere zumindest 80%, insbesondere 90% eines Schwingen-Auslenkwinkelintervalls Kontakt mit dem Riemen (24) hat.

8. Fahrzeug (10) nach einem der Ansprüche 2 bis 7, **dadurch gekennzeichnet, dass**
das Riemenleitelement (58) eine Rolle, ist, wobei die Rolle vorzugsweise koaxial zur Schwingen-Momentanschwenkachse (S₃₂) angeordnet ist und ein Riemenleitelement-Durchmesser (d₅₈) mindestens so groß ist wie die Hälfte des Antriebsriemenscheiben-Durchmessers (d₃₆), insbesondere zumindest so groß wie der Antriebsriemenscheiben-Durchmessers (dse).

9. Fahrzeug (10) nach einem der vorstehenden Ansprüche, **dadurch gekennzeichnet, dass**
(a) der Antrieb (16) einen Elektromotor (20) und ein Getriebe (50) aufweist und das Getriebe (50) eine Getriebe-Abtriebswelle (74) aufweist, die mit der Antriebsriemenscheibe (36) koaxial verbunden ist und
(b) im unbeladenen Zustand des Fahrzeugs (10)
(i) eine Getriebe-Abtriebswelle (74) oberhalb einer Motordrehachse des Elektromotors (20) liegt und/oder
(ii) eine Abtriebsriemenscheiben-Drehachse unterhalb der Antriebsriemenscheiben-Drehachse (Dse), insbesondere unterhalb der Motor-Drehachse (D20), liegt und/oder
(iii) die Schwingen-Momentanschwenkachse (S₃₂) unterhalb der Antriebsriemenscheiben-Drehachse (D₃₆) liegt und/oder
(iv) die Abtriebsriemenscheiben-Drehachse (D₂₆) unterhalb einer Geraden (G) durch die Antriebsriemenscheiben-Drehachse (D₃₆) und die Schwingen-Momentanschwenkachse (S₃₂) liegt.

10. Fahrzeug (10) nach einem der vorstehenden Ansprüche, **dadurch gekennzeichnet, dass**
(a) die Spannrolle (40) einen Spannrollen-Umschlingungswinkel (β) hat, der von dem Schwingen-Auslenkwinkel (α) abhängt,
(b) der Ruhe-Umschlingungswinkel (β₀), wenn die Schwinge (32) maximal ausgefedert ist, um höchstens 40°, vorzugsweise um höchstens 27°, von einem Grenz-Umschlingungswinkel (βₘₐₓ) abweicht, wenn die Schwinge (32) maximal eingefedert ist und/oder
(c) Ruhe-Umschlingungswinkel (β₀) um höchstens 40°, vorzugsweise um höchstens 27°, von einem Extrem-Umschlingungswinkel (βₑₓₜ), bei dem die Funktion, die den Umschlingungswinkel in Abhängigkeit vom Schwingen-Auslenkwinkel (α) angibt, ein lokales Extremum durchläuft, abweicht.

11. Fahrzeug (10) nach einem der vorstehenden Ansprüche, **dadurch gekennzeichnet, dass** ein maximaler Schwingen-Auslenkwinkel (α) zumindest 25°, insbesondere zumindest 30°, beträgt.

12. Fahrzeug (10) nach einem der vorstehenden Ansprüche, **dadurch gekennzeichnet, dass** das Leertrum (30) innerhalb der Einfederbewegung eine Lage einnimmt, in dem in einem Spann-Abschnitt (A) zwischen der Spannrolle (40) und dem Riemenleitelement (58) unter einem Spannabschnitt-Winkel (γ) von höchstens 15°, vorzugsweise höchstens 10°, zum Lasttrum (68) verläuft.

13. Fahrzeug (10) nach einem der vorstehenden Ansprüche, **dadurch gekennzeichnet, dass**
(a) das Leertrum (30) im Umlenkabschnitt (U) unter einem Abdräng-Winkel (δ) zu einer Tangente (T) an eine Unterseite der Abtriebsriemenscheibe (26) und eine Unterseite der Antriebsriemenscheibe (36) verläuft,
(b) der Abdräng-Winkel (δ) zumindest 10° beträgt, bei wenn die Schwinge (32) maximal eingefedert ist,

14. Fahrzeug (10) nach einem der vorstehenden Ansprüche, **dadurch gekennzeichnet, dass** die Federung (18) einen Stoßdämpfer (56), insbesondere mit hydraulischer Dämpfung, aufweist.

15. Fahrzeug (10) nach einem der vorstehenden Ansprüche, **dadurch gekennzeichnet, dass** das
im ausgefederten Zustand der Schwinge (32) eine Projektion (p₄₀) der Spannrollen-Drehachse (D₄₀)auf die Gerade (G) durch die Antriebsriemenscheiben-Drehachse (Dse) einen Abstand von höchstens dem 0,4-fachen des Abstands von Abtriebsriemenscheiben-Drehachse (D₂₆) zur Schwingen-Momentanschwenkachse (S₃₂) zur Abtriebsriemenscheiben-Drehachse (D₂₆) hat.
